# EUROPEAN PATENT SPECIFICATION

(11) **EP 2 929 612 B1**
(45) Date of publication and mention of the grant of the patent: **06.12.2023**
(21) Application number: 13814246.8
(22) Date of filing: 09.12.2013
(51) Int. Cl.: H01M 10/42, H01M 10/44, H02J 7/00, H01M 10/48

(54) **CHARGING DEVICE**
LADEVORRICHTUNG
DISPOSITIF DE CHARGE

(30) Priority: 07.12.2012 JP 2012268854
(43) Date of publication of application: 14.10.2015
(73) Proprietor: Koki Holdings Co., Ltd., Tokyo 108-6020 (JP)
(72) Inventor: ARADACHI, Takao, Hitachinaka-shi Ibaraki 312-8502 (JP); FUNABASHI, Kazuhiko, Hitachinaka-shi Ibaraki 312-8502 (JP)
(74) Representative: Meissner Bolte Partnerschaft mbB
(86) International application number: PCT/JP2013/007239
(87) International publication number: WO 2014/087676

(56) References cited:
- WO-A1-2012/077637
- US-A1- 2012 286 732
- US-B1- 6 204 639

## Description

### Technical Field

The present invention relates to a charging device, and particularly to a charging device suitable for charging a battery pack used as the power supply for a cordless power tool.

### Background Art

In recent years, a variety of battery packs housing lithium-ion batteries have been used to power cordless electrical equipment. Lithium-ion batteries are preferred for powering high-load equipment, such as power tools, and a variety of battery packs housing lithium-ion batteries are available for different type of power tools. For example, many of these battery packs can be classified according to output voltage, from low-output battery packs suitable for light work, owing to their light weight and compact size, to high-output, high-capacity battery packs used in power tools requiring more power. Other battery packs can be classified according to their internal structure, as some battery packs with the same output voltage have different internal configurations.

Having such a wide variety of battery packs is considerably inconvenient for users, since each battery pack must be charged using a special battery charger that has been specifically designed for that battery pack. In light of this problem, there has been proposed a charging device that is capable of supporting many types of battery packs (For example, refer to Japanese Patent Application Publication No. 2000-312440).

### Citation List

### Patent Literature

Japanese Patent Application Publication No. 2000-312440 WO 2012/077637 A discloses to provide a battery charger, an adapter and a charging device capable of easily charging each of a plurality of secondary batteries of different types.

US 2012/286732 A1

### Summary of Invention

### Solution to Problem

This conventional charging device can charge battery packs having different numbers of battery cells, as well as battery packs possessing the same number of battery cells but having different internal structures. However, since the conventional charging device cannot discern differences in the internal structures of battery packs, the device cannot be expected to charge battery packs at specifications adjusted for the differences in their internal structures. For example, the conventional charging device might drive its built-in cooling fan during the charging operation to cool the battery pack, even though the battery pack itself possesses a cooling function. Some battery packs have a built-in microcomputer for determining whether charging is feasible.
When determining that charging is not feasible, the microcomputer controls a shutdown circuit provided in the battery pack to interrupt the electric current supplied from the charging device in order to halt charging operations. However, since temperature data related to the battery is not transmitted to the charging device, a charging device with this configuration cannot implement optimum when charging becomes unfeasible solely due to the battery temperature temporarily rising too high, for example.

In view of the foregoing, it is an object of the present invention to provide a charging device capable of determining the type of a battery pack, accounting for structural differences in battery packs, and capable of optimally charging each of various battery packs based on the results of such determinations.

The present invention is set out in the independent claim 1 of the appended claims. Advantageous further developments of the invention are set forth in the dependent claims.

With this construction, the charging device can appropriately control charging and ancillary to charging such as whether to drive a cooling fan to cool the battery both for the autonomous first battery pack that monitors charging itself to determine whether charging is feasible and the device-dependent second battery pack that provide information to the charging device for determining whether charging is feasible.

With the construction of the battery type discriminating means, the control means can appropriately control charging and ancillary to charging based on results of the discrimination between the first type battery pack and the second type battery pack.

Preferably, the connection portion has a positive terminal and a negative terminal. The positive terminal and the negative terminal supply the charging current. The first type battery pack is connected to the connecting portion only via the positive terminal and the negative terminal.

With this construction, the charging device can optimally charge each of the first type battery pack and the second type battery pack correspondingly even though the internal data of the first type battery pack connected to the connection portion is not conveyed to the charging device.

Preferably, the control means infers an internal state of the battery pack connected to the connection portion and controls the charging condition based on an inference result, when the battery type discriminating means determines that the battery pack is the first type battery pack.

With this construction, the charging device can infer the internal state of the battery pack connected to the connection portion and control charging based on the inference result even though the internal data of the first type battery pack is not conveyed to the charging device. Consequently, the charging device can perform charging efficiently and economically.

Preferably, the control means controls a charging condition to enter a standby state without performing a charging operation during a prescribed interval, when inferring that the secondary battery in the battery pack is an unchargeable state.

With this construction, the battery pack keeps its chargeable state with limitation. Consequently, the charging device can perform charging efficiently and economically.

Preferably, the charging device further includes cooling means. The cooling means cools the battery pack connected to the connection portion. The control means infers that the battery pack possesses a battery temperature control function and controls a charging condition to supply a charging current by the charging means without driving the cooling means, when the battery type discriminating means determines that the battery pack is the first type battery pack.

With this construction, the charging device can appropriately determine whether to drive the cooling means.

Preferably, the control means infers that the battery pack connected to the connection portion does not possess a battery temperature control function and controls a charging condition to supply charging current by the charging means with driving the cooling means, when the battery type discriminating means determines that the battery pack is the second type battery pack.

With this construction, the charging device can appropriately determine whether to drive the cooling means.

Preferably, the battery type discriminating means discriminates between a battery pack that is connected to the connection portion through an adapter and a battery pack that is connected directly to the connection portion without using the adapter.

With this construction, the charging device can determines whether the battery pack is connected to the connection portion through the adapter.

Preferably, the battery type discriminating means discriminates between the first type battery pack configured of three or more battery units connected in parallel and the second type battery pack configured of one battery unit or two battery units connected in parallel. The battery unit includes a plurality of battery cells connected in series.

With this construction, the charging device can discriminate between two types of battery packs according to those connection connected to the connection portion of the charging device.

Preferably, the battery type discriminating means discriminates between the first type battery pack that is connected to a power tool through an electric power supply cable and the second type battery pack that is connected directly to the power tool.

With this construction, the charging device can discriminate between two types of battery packs according to those mounting mounted to the power tool.

Preferably, the charging device further includes a charging current detecting unit. The charging current detecting unit is configured to detect the charging current. The control means infers an internal state of the battery pack connected to the connection portion based on a detection result of the charging current detecting unit and controls the charging conditions based on an inference result, when the battery type discriminating means determines that the battery pack is the first type battery pack.

With this construction, the charging device infers the internal state of the first type battery pack based on the charging current. Consequently, the charging device can control reasonable charging by rule of thumb.

Preferably, the connection portion has only a positive terminal and a negative terminal. The positive terminal and the negative terminal supply the charging current. The control means infers that the secondary battery in the battery pack is an unchargeable state and controls a charging condition to enter a standby state without performing a charging operation during a prescribed interval, when the charging current detecting means does not detect a charging current.

Preferably, the control means infers that the secondary battery is a chargeable state and controls a charging condition to cancel the standby state and perform a charging operation, when the charging current detecting means detects a current.

Preferably, the control means infers that the secondary battery is the chargeable state and controls a charging condition to halt supplying the charging current based on an inference result, when the charging current detected by the charging current detecting means is less than a prescribed value after the control means canceled the standby state and performed the charging operation.

Preferably, the charging device further includes display means. The display means displays a battery state of the battery pack connected to the connecting portion. The battery state includes a standby state, a charging state, and a charging completed state.

Preferably, the charging device further includes: battery type discriminating means; and cooling means. The battery type discriminating means discriminates a battery type of the battery pack connected to the connection portion. The cooling means cools the battery pack. The control means controls a charging condition to supply the charging current by the charging means without driving the cooling means, when inferring that the battery pack possesses a battery temperature control function based on a discrimination result of the battery type discriminating means.

Preferably, the charging device further includes: battery type discriminating means; and cooling means. The battery type discriminating means discriminates a battery type of the battery pack connected to the connection portion. The cooling means cools the battery pack. The control means drives the cooling means at least during supplying the charging current by the charging means, when inferring that the battery pack does not possess a battery temperature control function based on a discrimination result of the battery type discriminating means.

Preferably, the battery type discriminating means discriminates between a battery pack that is connected to the connection portion through an adapter and a battery pack that is connected directly to the connection portion without using the adapter. The control means infers that the battery pack that is connected to the connection portion through the adapter possesses the battery temperature control function and the battery pack that is connected directly to the connection portion without using the adapter does not possess the battery temperature control function.

Preferably, the battery type discriminating means discriminates between a battery pack configured of three or more battery units connected in parallel and a battery pack configured of one battery unit or two battery units connected in parallel. The battery unit includes a plurality of battery cells connected in series. The control means infers that the battery pack configured of three or more battery units connected in parallel possesses the battery temperature control function and the battery pack configured of one battery unit or two battery units connected in parallel does not possess the battery temperature control function.

Preferably, the battery type discriminating means discriminates between a battery pack that is connected to a power tool through an electric power supply cable and a battery pack that is connected directly to the power tool. The control means infers that the battery pack that is connected to the power tool through the electric power supply cable possesses the battery temperature control function and the battery pack that is connected directly to the power tool does not possess the battery temperature control function.

### Advantageous Effects of Invention

The charging device according to the present invention determines whether the battery pack being charged is an autonomous first battery pack that monitors charging itself to determine whether charging is feasible, or a device-dependent second battery pack that provides information to the charging device for determining whether charging is feasible, whereby the charging device controls charging while determining whether charging is feasible. In this way, the charging device of the present invention can perform charging efficiently and economically based on results of the determinations.

### Brief Description of Drawings

[fig.1]Fig. 1 is a circuit diagram showing a device-dependent battery pack mounted on a charging device according to a preferred embodiment.
[fig.2]Fig. 2 is a circuit diagram showing an autonomous battery pack mounted on the charging device according to the preferred embodiment.
[fig.3]Fig. 3 is a circuit diagram showing another autonomous battery pack mounted on the charging device according to the preferred embodiment.
[fig.4]Fig. 4 is a flowchart illustrating steps in a process executed by the charging device according to the preferred embodiment for charging either the device-dependent battery pack or one of the autonomous battery packs.
[fig.5]Fig. 5 is a circuit diagram of a circuit for distinguishing between a device-dependent battery.

### Description of Embodiments

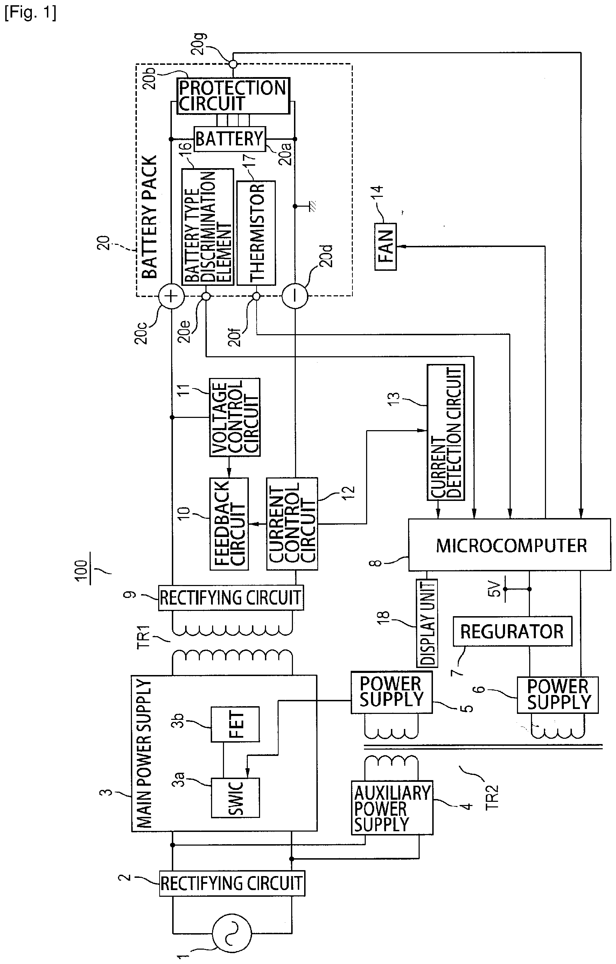

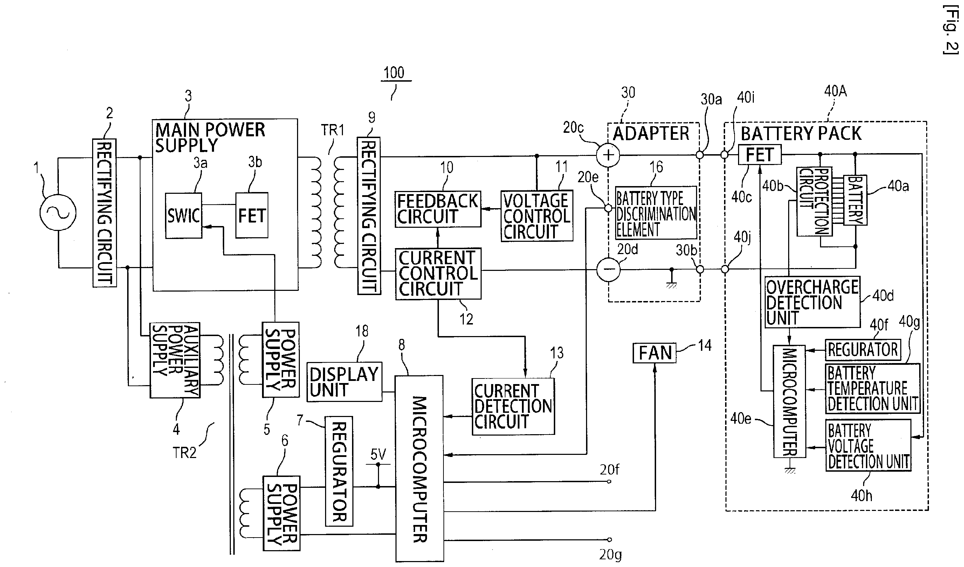

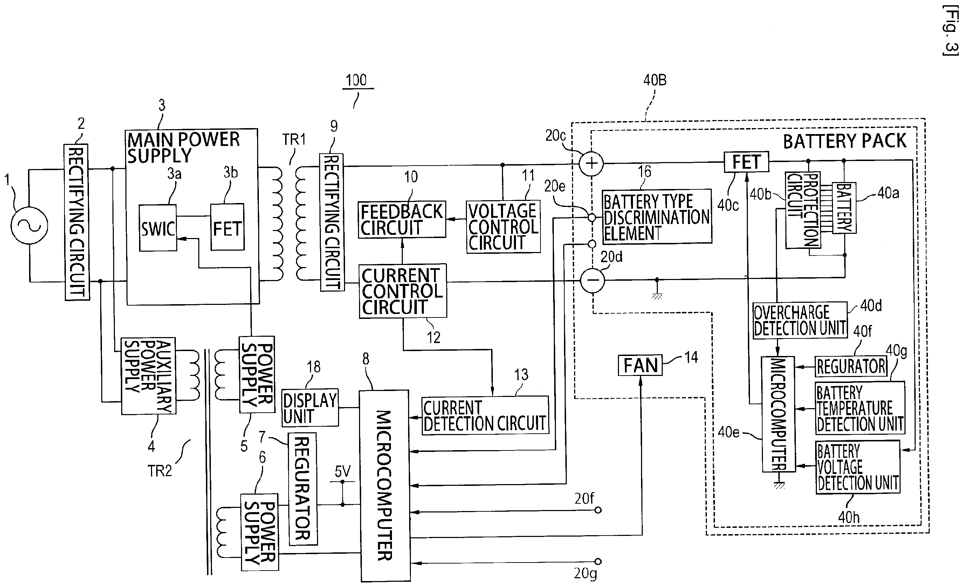

Next, a charging device 100 according to a preferred embodiment of the invention, and a battery pack mounted on the charging device 100 will be described while referring to Figs. 1 through 5. In Fig. 1, a device-dependent battery pack 20 mounted on the charging device 100 is dependent on the charging device 100. In Figs. 2 and 3, respective autonomous battery packs 40A and 40B are mounted on the charging device 100.

The charging device 100 according to the preferred embodiment has a function for classifying a wide variety of battery packs as battery packs that are either dependent on battery chargers or battery packs that are autonomous. A battery pack dependent on the charging device (hereinafter called a "device-dependent battery pack") denotes a battery pack configured to provide data, such as battery temperature data, to the charging device for determining charging feasibility, while an autonomous battery pack denotes a battery pack having a function for determining charging feasibility itself and for controlling whether charging is executed based on the determination results. When a device-dependent battery pack is mounted on the charging device, the charging device can read data related to the internal battery cells of the battery pack and can set charging conditions including charging feasibility. With an autonomous battery pack, the charging device cannot read data related to the target battery cells and, hence, cannot set optimal charging conditions.

Here, charging conditions regulate at least one of (1) charge control at the start of charging, during charging, or at the end of charging, and (2) control ancillary to charging performed by the charging device. For example, control operations for driving a cooling fan to cool the battery or control operations for not driving the cooling fan constitute one charging condition. Similarly, control operations for initiating charging after determining that it is possible to begin charging, or control operations for immediately entering a standby state without performing charging constitute one charging condition. Similarly, control operations for setting the timing to end charging constitute a charging condition.

The method of distinguishing between a device-dependent battery pack and an autonomous battery pack does not depend on the number of built-in battery cells or the number of cells connected in series. For example, a battery pack having ten cells connected in series for outputting 36 volts may be classified as either a device-dependent battery pack or an autonomous battery pack. Further, some battery packs have a plurality of battery units connected in parallel, wherein each battery unit has a plurality of battery cells connected in series and the battery units are connected in parallel by connecting corresponding battery cells in each battery unit. Depending on the relationship of this battery pack to the charging device, the charging device may classify the battery pack as either a device-dependent battery pack or an autonomous battery pack. However, most device-dependent battery packs do not possess battery units connected in parallel and, at most, have two battery units connected in parallel. In addition, most device-dependent battery packs are small in size and have connection terminals formed on the battery pack itself. The device-dependent battery pack is generally mounted on the body of a power tool by sliding the battery pack onto the body of the power tool or inserting the battery pack into the body of the power tool and is used integrally with the power tool. A typical autonomous battery pack is a relatively large power supply, such as a backpack-type battery pack having a large battery capacity or a waist belt battery pack worn around the waist. Battery cells accommodated in the backpack are housed in a plurality of cell units. Each cell unit has a plurality of battery cells connected in series, and the cell units are connected in parallel by connecting corresponding battery cells of each cell unit. Normally, three or more cell units are connected in parallel. In addition, the autonomous battery pack may be connected to charging device through a special adapter or may be mounted directly on the charging device without the use of an adapter.

Fig. 1 shows the charging device 100 when the device-dependent battery pack 20 is mounted thereon. While the device-dependent battery pack 20 is one possible type of device-dependent battery pack, the device-dependent battery pack is not limited to the structure in Fig. 1. Fig. 2 shows the charging device 100 when the autonomous battery pack 40A is mounted thereon. The autonomous battery pack 40A is an example of a battery pack that connects to the charging device through an adapter. Fig. 3 shows the charging device 100 when the autonomous battery pack 40B is mounted thereon. The autonomous battery pack 40B is an example of a battery pack that can be mounted directly on the charging device without the use of an adapter.

The device-dependent battery pack 20 shown in Fig. 1 houses a battery 20a, a protection IC 20b, a battery type discrimination element 16, and a thermistor 17. The device-dependent battery pack 20 also includes positive and negative terminals for respectively connecting to a positive terminal 20c and a negative terminal 20d provided on the charging device 100. A charging path is formed by connecting corresponding positive terminals and negative terminals. In addition to the positive and negative terminals, the device-dependent battery pack 20 is also provided with an output terminal for connecting the battery type discrimination element 16 to a battery type data input terminal 20e provided on the charging device 100; an output terminal for connecting the thermistor 17 to a temperature data input terminal 20f provided on the charging device 100; and an alert signal output terminal for transmitting an alert signal outputted from the protection IC 20b to an alert signal input terminal 20g provided on the charging device 100. Hence, the positive terminal 20c, negative terminal 20d, battery type data input terminal 20e, temperature data input terminal 20f, and alert signal input terminal 20g configuring the charging path are all provided on the charging device 100. The charging device 100 shown in Figs. 2 and 3 has a structure identical to the charging device 100 in Fig. 1.

The battery 20a shown in Fig. 1 is a lithium-ion battery configured of a plurality of cells connected in series. The protection IC 20b monitors the voltage across each battery cell in order to prevent even one cell from overcharging or over-discharging. The voltage of the battery cells rises during a charging operation. Once the voltage exceeds a threshold voltage at which the battery cell is judged to be fully charged, the protection IC 20b transmits a signal to the charging device 100 via the alert signal input terminal 20g. When the device-dependent battery pack 20 is connected to a power tool and the power tool is operated, the voltage of the battery cells drops as the battery 20a is discharged. Once the voltage drops below a lower threshold designating the end of discharge, the protection IC 20b outputs a signal to the body section of the power tool via the alert signal input terminal 20g in order to halt driving of the power tool.

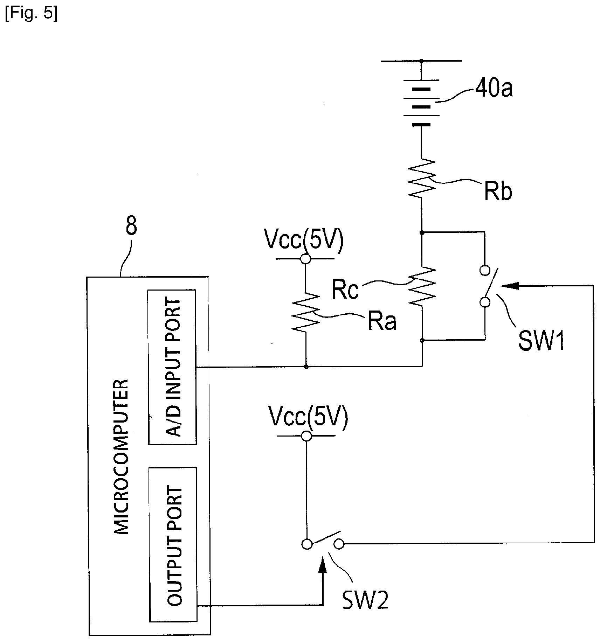

The battery type discrimination element 16 is configured of resistors having resistance values that correspond to types of battery packs. These resistance values can reveal information, such as the number of battery cells directly connected to the charging device. The battery type discrimination element 16 will be described later with reference to Fig. 5. The thermistor 17 is a thermosensor that is disposed in contact with or adjacent to the battery 20a for detecting the temperature of the battery 20a. The thermistor 17 conveys temperature data to the charging device 100 via the temperature data input terminal 20f. As described above, the device-dependent battery pack 20 is configured to provide internal data of a battery pack to the charging device 100, such as battery type data, battery temperature data, and an alert signal indicating an alert state of the battery 20a. The charging device 100 sets charging conditions that include the charging feasibility, based on data provided from the device-dependent battery pack 20.

The autonomous battery pack 40A shown in Fig. 2 is a type of battery pack that connects the charging device 100 via a special adapter 30. The adapter 30 serves to connect a positive terminal 40i and a negative terminal 40j on the autonomous battery pack 40A to the positive terminal 20c and negative terminal 20d provided on the charging device 100. The adapter 30 is provided with an input-side positive terminal 30a and an input-side negative terminal 30b for connecting to the positive terminal 40i and negative terminal 40j of the autonomous batter pack 40A, as well as an output-side positive terminal and an output-side negative terminal for connecting to the positive terminal 20c and negative terminal 20d of the charging device 100. The battery type discrimination element 16 for identifying the autonomous battery pack 40A is housed in the adapter 30. The battery type discrimination element 16 is provided with a terminal for outputting battery type data when the battery type is detected. This terminal is connected to the battery type data input terminal 20e of the charging device 100, allowing the battery type data to be conveyed to the charging device 100. Neither the autonomous battery pack 40A nor the adapter 30 shown in Fig. 2 convey temperature data of a battery 40a, or a signal outputted from a protection IC 40b to the charging device 100. Consequently, the temperature data input terminal 20f and alert signal input terminal 20g provided on the charging device 100 are in an open state when the autonomous battery pack 40A is mounted on the charging device 100.

As with the device-dependent battery pack 20 in Fig. 1, the autonomous battery pack 40A also houses a battery 40a and a protection IC 40b. Unlike the device-dependent battery pack 20, the positive terminal on the battery 40a is electrically connected to the positive terminal 40i of the autonomous battery pack 40A via an FET 40c, and the negative terminal on the battery 40a is electrically connected to the negative terminal 40j of the autonomous battery pack 40A. The autonomous battery pack 40A is further structurally different from the device-dependent battery pack 20 in that the autonomous battery pack 40A houses the FET 40c for suspending charging, a microcomputer 40e, an overcharge detection unit 40d, a regulator 40f, a battery temperature detection unit 40g, and a battery voltage detection unit 40h.

The regulator 40f regulates the power supplied from the battery 40a to power the microcomputer 40e. The overcharge detection unit 40d detects an alert signal outputted from the protection IC 40b when the voltage of battery cells in the battery 40a exceeds the threshold voltage defining a full charge and conveys this signal to the microcomputer 40e. The battery temperature detection unit 40g detects the temperature of the battery 40a using a thermistor and conveys the detected temperature data to the microcomputer 40e. The battery voltage detection unit 40h detects the voltage of the battery 40a and transmits the detected battery voltage data to the microcomputer 40e. The FET 40c is connected to the output port of the microcomputer 40e and is turned on and off by the microcomputer 40e. When the FET 40c is off, a charging current from the charging device 100 is interrupted so that the battery 40a is not charged. Conversely, when the FET 40c is on, the battery 40a is charged by the charging current. The microcomputer 40e turns the FET 40c on and off based on data, including overcharge data received from the overcharge detection unit 40d, temperature data received from the battery temperature detection unit 40g, and battery voltage data received from the battery voltage detection unit 40h. Thus, the autonomous battery pack 40A itself determines whether charging is feasible and allows charging when determining that charging is feasible, but does not allow charging when determining that the state of the battery 40a is unsuitable for charging.

More specifically, the microcomputer 40e in the autonomous battery pack 40A shown in Fig. 2 turns off the FET 40c to interrupt the charging circuit when (1) determining that the battery cells are in an overcharged state because detection results obtained from the battery voltage detection unit 40h indicate that the battery voltage exceeds the prescribed voltage or conversely that the battery cells are in an over-discharged state as indicated by an alert signal outputted from the protection IC 40b, and (2) when determining that the battery temperature detected by the battery temperature detection unit 40g exceeds the prescribed temperature. Note that the battery temperature detection unit 40g detects the battery temperature intermittently, and the microcomputer 40e turns on the FET 40c to cancel interruption of the charging circuit when the detected battery temperature falls below a prescribed temperature.

Fig. 3 shows the autonomous batter pack 40B, which is a type of battery pack similar to that shown in Fig. 2. However, while the autonomous battery pack 40A in Fig. 2 is mounted on the charging device 100 through a special adapter 30, the autonomous battery pack 40B in Fig. 3 is mounted directly on the charging device 100 without the need for a special adapter. Further, while the battery type discrimination element 16 is housed in the adapter 30 used with the autonomous battery pack 40A shown in Fig. 2, the autonomous battery pack 40B shown in Fig. 3 accommodates the battery type discrimination element 16 together with the battery 40a, protection IC 40b, FET 40c, microcomputer 40e, overcharge detection unit 40d, regulator 40f, battery temperature detection unit 40g, and battery voltage detection unit 40h. The autonomous battery pack 40B shown in Fig. 3 differs from the autonomous battery pack 40A in Fig. 2 only in that the battery pack houses the battery type discrimination element 16 and is directly mountable on the charging device 100 without the use of an adapter, but is identical to the autonomous battery pack 40A in all other aspects.

Next, the charging device 100 according to the preferred embodiment will be described. The charging device 100 has the same structure in Figs. 1 through 3.

The charging device 100 is a computer-controlled charging device housing a microcomputer 8 and differs from a specialized device that can charge only specific battery packs. The charging device 100 includes power supplies, the microcomputer 8, various detection circuits connected to the A/D input port of the microcomputer 8, and various controlled components connected to the output port of the microcomputer 8.

The power supplies include a main power supply 3, and an auxiliary power supply 4. The main power supply 3 supplies the charging power for charging a battery pack. The main power supply 3 in turn is powered by an AC power supply 1. The AC power supply 1 supplies an AC current that is rectified by a rectifying circuit 2 to produce DC power. The rectifying circuit 2 then feeds this DC power to the main supply 3. The main power supply 3 is primarily configured of a switching IC 3a, and a switching FET 3b. The switching IC 3a and switching FET 3b perform power width modulation (PWM) control based on feedback from the secondary side of a high-frequency transformer TR1 in order to supply a prescribed current/voltage to the charge line on the secondary side of the high-frequency transformer TR1. A rectifying circuit 9 for rectifying the output of the main power supply 3 is connected to the secondary side of the high-frequency transformer TR1.

The auxiliary power supply 4 is a power supply circuit on the primary side for control system of the microcomputer 8 and the switching IC 3a. As with the main power supply 3, the auxiliary power supply 4 is configured of a switching IC, switching FET, and the like and supplies a prescribed power through PWM control. The auxiliary power supply 4 is connected to the primary winding of a high-frequency transformer TR2. A power supply 5 is connected to the secondary winding of the high-frequency transformer TR2, while power supply 6 is connected to the tertiary winding. The power supply 5 is configured of a rectifying circuit, a constant voltage circuit, and the like and supplies power to the switching IC 3a. The power supply 6 is configured of a rectifying circuit and the like and supplies a voltage to the microcomputer 8 and the like. A regulator 7 is provided for regulating the output voltage of the power supply 6 at a prescribed constant voltage. In the preferred embodiment, the regulator 7 outputs a constant voltage of 5 V to the microcomputer 8 and the like.

The microcomputer 8 controls charging operations based on battery type data acquired from the battery type discrimination element 16, temperature data acquired from the thermistor 17, and current data acquired from a current detection circuit 13. The microcomputer 8 also controls the operations of a cooling fan 14, and a display unit 18.

The charging device 100 also includes a feedback circuit 10 for providing data indicating the voltage and current on the secondary side of the high-frequency transformer TR1 to the primary side; and a voltage control circuit 11 and a current control circuit 12 for detecting the voltage data and current data, respectively, and for conveying this data to the feedback circuit 10. The current detection circuit 13 detects the charging current. The cooling fan 14 functions to cool the battery 20a. For a small battery pack (e.g., the device-dependent battery pack 20) that can be mounted directly on the power tool, the cooling fan 14 is provided in a suitable position for cooling the battery 20a built into the device-dependent battery pack 20. However, when the autonomous battery pack 40A is connected to the power tool through the adapter 30, as shown in Fig. 2, the cooling fan 14 is positioned for cooling the adapter 30. If the adapter 30 possesses no components that generate heat or if the heat-generating components can be sufficiently cooled naturally, the cooling fan 14 need not be engaged to forcibly cool the adapter 30. In such cases, it is preferable to halt the cooling fan 14 or reduce its rotational speed in order to reduce noise and power consumption attributed to the cooling fan 14.

The display unit 18 notifies the user of the charging state. Charging states may include "pre-charging," "charging," "charging complete," and "charging suspended." The charging device 100 may enter the latter state when the battery temperature exceeds the prescribed value.

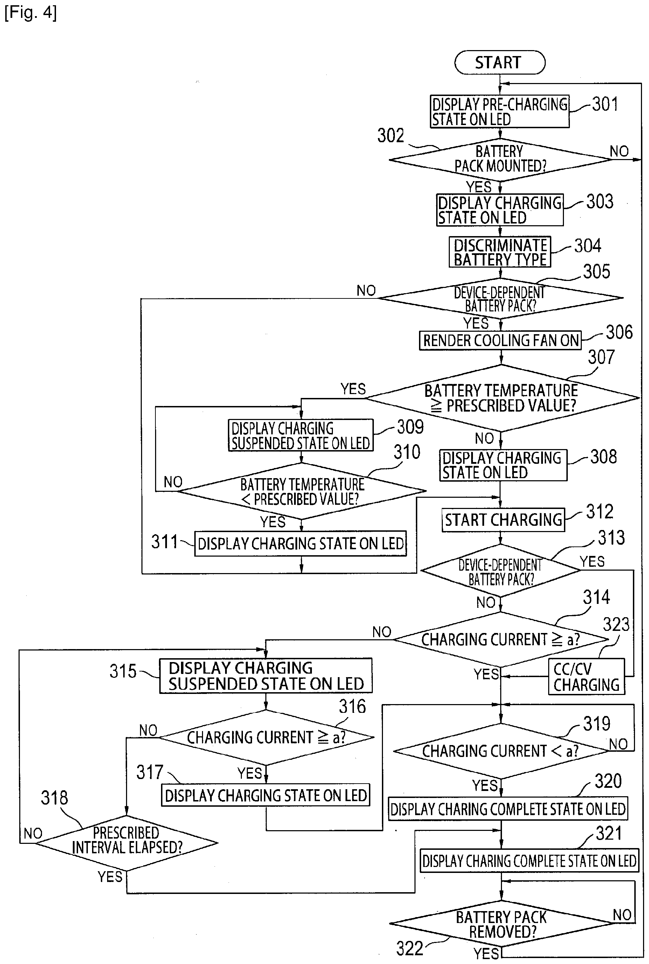

Fig. 4 is a flowchart illustrating steps in the operations performed by the charging device 100 according to the preferred embodiment. In S301 at the beginning of the process in Fig. 4 before a battery pack has been mounted on the charging device 100, the charging device 100 displays a message on the display unit 18 for notifying the user that a battery pack has not been connected (i.e., the pre-charging state). If the display unit 18 is configured of an LED, for example, the display unit 18 may be controlled to light the LED in red. In S302 the charging device 100 determines whether a battery pack has been mounted. The charging device 100 may make this determination by detecting the value of the battery type discrimination element 16 provided in the device-dependent battery pack 20 or autonomous battery pack 40B, or in the adapter 30 used with the autonomous battery pack 40A. When the charging device 100 determines in S302 that a battery is mounted (S302: YES), in S303 the charging device 100 displays a message on the display unit 18 for notifying the user that charging has begun (i.e., the charging state). For example, the charging device 100 may control the display unit 18 to emit orange light from the LED.

In S304 the charging device 100 determines whether the mounted battery pack is an autonomous battery pack or a device-dependent battery pack based on results of detecting the value of the battery type discrimination element 16 provided in the device-dependent battery pack 20, autonomous battery pack 40B, or adapter 30. Here, the method of distinguishing between the device-dependent battery pack 20 and the autonomous battery packs 40A and 40B will be described with reference to Fig. 5. Fig. 5 shows one specific structure of the battery type discrimination element 16. In the example of Fig. 5, the battery type discrimination element 16 is configured of resistors Ra, Rb, and Rc and switching elements SW1 and SW2 configured of FETs or the like. The resistors Rb and Rc are connected in series between the A/D input port of the microcomputer 8 and the negative terminal (ground potential) on either the battery 20a or 40a. One end of the resistor Ra is connected to a reference voltage source Vcc (5 V) and the other end is connected to the resistor Rc and the switching element SW1. The switching element SW1 is connected between both ends of the resistor Rc and serves as the bypass of the resistor Rc when on. The other switching element SW2 is connected between a reference voltage source Vcc and the switching element SW1. The switching element SW2 turns on and off in response to the on and off state of the switching element SW2.

The battery type discrimination element 16 housed in the device-dependent battery pack 20, the battery type discrimination terminal housed in the adapter 30 used together with the autonomous battery pack 40A, and the battery type discrimination element 16 housed in the autonomous battery pack 40B shown in Fig. 3 all have the same configuration. The values of the resistors Ra, Rb, and Rc vary according to the number of cells in the battery pack. When the device-dependent battery pack 20 and the autonomous battery packs 40A and 40B have the same number of cells, the resistors Ra and Rb have the same values, but the value of the resistor Rc varies.

The conventional battery type identification element has a similar configuration to that shown in Fig. 5, without the switching element SW2. In this conventional configuration, the signal outputted from the output port of the microcomputer 8 is applied to the switching element SW1 for controlling the on/off state of the switching element SW1. As a consequence, the conventional identification element cannot distinguish between the device-dependent battery pack 20 and autonomous battery packs 40A and 40B, as will be described below.

For example, let's assume that the resistance values of resistors Ra, Rb, and Rc are a, b, and c, respectively. In the conventional circuit, the switching element SW1 is turned on when a high-level signal is outputted from the output port of the microcomputer 8. At this time, the voltage applied to the A/D input port of the microcomputer 8 is found by multiplying the 5-V reference voltage by b/(a+b). However, this voltage value is the same for both device-dependent battery packs and autonomous battery packs whose batteries are configured of ten cells connected in series, for example. Thus, while the conventional circuit can determine that the battery has ten cells, the circuit cannot distinguish between a device-dependent battery pack and an autonomous battery pack.

With the circuit according to the preferred embodiment shown in Fig. 5, the switching element SW1 is on when the switching element SW2 is on, and the reference voltage source Vcc applies the 5-V reference voltage to the switching element SW1. As in the conventional example, the voltage applied to the A/D input port of the microcomputer 8 is found by multiplying the 5-V reference voltage by b/(a+b), enabling the microcomputer 8 to determine the number of cells in the battery pack mounted on the charging device 100. However, when the switching element SW2 is turned off by a signal outputted from the microcomputer 8, the switching element SW1 also turns off, and the voltage applied to the A/D input port of the microcomputer 8 is a value found by multiplying the 5-V reference voltage nu (b+c)/(a+b+c). Since the value of the resistor Rc differs between a device-dependent battery pack and an autonomous battery pack, even when both battery packs possess ten cells, the voltage applied to the A/D input port of the microcomputer 8 when the switching element SW2 is turned off differs when the battery pack is device-dependent and autonomous, enabling the microcomputer 8 to distinguish between the two.

Returning to the flowchart in Fig. 4, when the charging device 100 determines that the battery pack is device-dependent (S305: YES), in S306 the charging device 100 drives the cooling fan 14 in order to suppress heat emission from the battery 20a during charging. In S307 the charging device 100 detects the temperature of the battery 20a using the thermistor 17 provided in the device-dependent battery pack 20 and determines whether the battery temperature exceeds the prescribed value. If the battery temperature exceeds the prescribed value (S307: YES), indicating that the battery temperature is not suitable for charging, the charging device 100 enters a standby state and displays a message on the display unit 18 notifying the user that charging has been temporarily suspended due to high temperatures. For example, in S309 the charging device 100 flashes the LED in red fir a fixed interval. Next, the charging device 100 cools the hot battery, and in S310 determines whether the battery temperature has dropped below a prescribed value. When the charging device 100 determines in S310 that the battery temperature is less than the prescribed value (S310: YES), in S311 the charging device 100 notifies the user that charging will be resumed by lighting the LED in orange, for example, and in S312 resumes charging.

However, if the charging device 100 determines in S307 that the battery temperature does not exceed the prescribed value (S307: NO), indicating that the current battery temperature poses no problems to the charging operation, in S308 the charging device 100 displays data on the display unit 18 indicating that charging is underway by lighting the LED in orange, as described in S311, and in S312 begins charging.

Once charging is initiated in S312, in S313 the charging device 100 determines whether the battery pack is device-dependent based on the determination results in S304. If the battery pack is not device-dependent (i.e., if an autonomous battery pack is mounted on the charging device 100; S313: NO), in S314 the charging device 100 determines whether the charging current detected by the current detection circuit 13 exceeds a prescribed value a. As described above, when the battery temperature of the autonomous battery packs 40A and 40B becomes too high, the microcomputer 40e interrupts the charging current by switching off the current shutdown FET 40c provided in the battery pack. Since a charging current is not flowing in this case, in S314 the charging device 100 determines that the charging current does not exceed the prescribed value a. Thus, even though the charging device 100 can recognize that a charging current is not flowing when the autonomous battery packs 40A and 40B is connected to the charging device 100, the charging device 100 cannot determine the state of the battery 40a housed in the autonomous battery packs 40A and 40B from this information. There are various possible reasons for the charging current being interrupted, including a cell in the battery 40a being defective, the battery 40a being in a fully charged state, or the battery temperature being too high. Generally, the most likely of these reasons is that the battery temperature has become too high to be suitable for charging and that charging has been temporarily suspended. Accordingly, when the charging device 100 determines that the charging current is less than the prescribed value a, the charging device 100 infers that charging of the battery 40a is temporarily not feasible.

Hence, in S315 the charging device 100 notifies the user through the display unit 18 that charging has been temporarily suspended. For example, the charging device 100 controls the display unit 18 to flash the LED in red for a fixed interval. Next, the charging device 100 determines intermittently over a prescribed interval in S316 and S318 whether the charging current exceeds the prescribed value a. As described above, the charging device infers that the battery is in a temporary unchargeable state when the charging current is less than the prescribed value a. However, the charging device 100 infers that the temporary unchargeable state has been canceled when the charging current exceeds the prescribed value a (S316: YES) before the prescribed interval has elapsed (S318: NO). This change may occur when the battery temperature, initially found to be in a high-temperature state, drops below a prescribed temperature, for example. Note that if the FET 40c is shut down due to a defective battery cell or other abnormality that is not temporary, the FET 40c will remain shut down, and the charging current will remain below the prescribed value a.

Hence, when the charging current is found to exceed the prescribed value a (S316: YES), the charging device 100 resumes charging and in S317 displays data through the display unit 18 informing the user that charging has begun. For example, the charging device 100 controls the display unit 18 to light the LED in orange. As described above, the process to determine the level of the charging current implemented in S314 and S316 is a process of inferring the internal state of the battery pack.

If the charging suspension continues for a prescribed time (five hours, for example; S318: NO), in S321 the charging device 100 aborts the operation to supply a charging current.

When the charging device 100 determines during the charging process that the electric current detected by the current detection circuit 13 is less than the prescribed value a (S319: YES), the charging device 100 infers that the battery has reached a full charge. In other words, if the charging device 100 determines in S319 that the charging current is less than the prescribed value a, the charging device 100 infers that the FET 40c has been turned off because the batter is fully charged. Accordingly, in S320 the charging device 100 controls the display unit 18 to light the LED in green to inform the user that the battery is fully charged, and in S321 ends the charging operation. As in S314 and S316 described above, the process in S319 is performed to infer the internal state of the battery pack.

Thereafter, the charging device 100 repeatedly determines in S322 whether the battery pack has been removed from the charging device 100. When the battery pack has been removed (S322: YES), the charging device 100 returns to S301. The process for determining whether the battery pack has been removed is similar to the process in S302 for determining whether the battery pack has been mounted. For example, the charging device 100 makes this determination by detecting the value of the battery type discrimination element 16 provided in the device-dependent battery pack 20, autonomous battery pack 40B or adapter 30.

On the other hand, if the charging device 100 determines in S313 that the battery pack is device-dependent (S313: YES), the charging device 100 of the preferred embodiment skips the determination in S314 and begins charging the battery pack at a constant current/voltage according to a common charging method for charging lithium-ion batteries in S323. According to this charging method, the charging device 100 charges the battery pack through constant current control from the initial stage of charging, and subsequently switches to constant voltage control when the battery voltage reaches a prescribed value. Here, the battery voltage rises during the charging process, and the electric current decreases after the charging operation enters constant voltage control. When the current drops below the prescribed value a (S319: YES), the charging device 100 determines that the device-dependent battery pack is fully charged and performs the process from step S320 described above.

As described above, the charging device according to the preferred embodiment determines whether the battery pack connected to the charging device is a device-dependent battery pack of an autonomous battery pack. When the charging device determines that the battery pack is autonomous battery pack, the charging device can suitably infer the state of the battery, even though internal data for the battery pack is not conveyed to the charging device, and can set appropriate charging conditions based on the results of this inference, such as whether to drive the cooling fan. The process described in S314 and S316 of the preferred embodiment serves to infer the internal state of an autonomous battery pack.

While the invention has been described in detail with reference to specific embodiments thereof, the invention is defined by the attached claims. For example, the process in S314 and S316 for determining whether the charging current exceeds the prescribed value a may be achieved by determining whether a charging current is being supplied. Further, the display unit 18 may be configured of an LCD for notifying the user about the charging process through text displays and the like.

### Reference Signs List

100 Charging Device
1 AC power supply
2 Rectifying Circuit
3 Main Power Supply
3a Switching IC
3b Switching FET
4 Auxiliary Power Supply
5, 6 Power Supply
7 Regulator
8 Microcomputer
10 Feedback Circuit
11 Voltage Control Circuit
12 Current Control Circuit
13 Current Detection Circuit
14 Cooling Fan
18 Display Unit
20 Device-dependent Battery Pack
16 Battery Type Discrimination Element
17 Thermistor
20a Battery
20b Protection IC
20e Battery Type Data Input Terminal
20f Temperature Data Input Terminal
20g Alert Signal Input Terminal
30 Adapter
30a Input-side Positive Terminal
30b Input-side Negative Terminal
40 Autonomous Battery Pack
40a Battery
40b Protection Circuit
40c FET
40e Microcomputer
40f Regulator
40g Battery Temperature Detection Unit
40h Battery Voltage Detection Unit
40i Positive Terminal
40j Negative Terminal

## Claims

1. A charging device (10) comprising:
a connection portion (20c, 20d, 20e, 20f) to which selectively connectable are a first type battery pack (40) and a second type battery pack (20),
- wherein the first type battery pack (40) is having a first battery (40a) that can be charged by the charging device (10) and is having a switching circuit (40c) and the first type battery pack (40) is configured to turn the switching circuit (40c) off based on internal data (307) of the first type battery pack (40) to interrupt a charging current, and
- wherein the second type battery pack (20) is having a second battery (20a)
that can be charged by the charging device (10) and the second type battery pack (20) is configured to provide internal data (307) of the second type battery pack (20) to the charging device (10); and
the charging device (10) further comprising charging means for supplying charging current to the first battery (40a) or the second battery (20a) included in a battery pack when connected to the connection portion (20c, 20d, 20e, 20f); and
the charging device (10) further comprising a battery type discriminator (16) configured to discriminate between the first battery type pack (40) and the second battery type pack (20); and
the charging device further (10) comprising control means configured to control a charging condition of the second battery type pack (20) based on the internal data (307) of the second type battery pack (20) provided by the second type battery pack (20) when the second type battery pack (20) is connected to the connection portion (20c, 20d, 20e, 20f), and control a charging condition so as to abort (S318) the operation to supply the charging current when the first type battery pack (40) is connected to the connection portion (20c, 20d, 20e, 20f) and the control means infers that charging of the first battery (40a) included in the first type battery pack (40) is not feasible (S316).

2. The charging device (10) according to claim 1, **characterized in that** the charging device (10) further comprises battery type discriminating means for discriminating between the first type battery pack (40) and the second type battery pack (20).

3. The charging device (10) according to claim 2, **characterized in that** the connection portion (20c, 20d, 20e, 20f) has a positive terminal and a negative terminal for supplying the charging current, and the first type battery pack (40) is connected to the connecting portion only via the positive terminal and the negative terminal.

4. The charging device (10) according to claim 2, **characterized in that** the control means infers an internal state of the battery pack connected to the connection portion (20c, 20d, 20e, 20f) and controls the charging condition based on an inference result, when the battery type discriminating means determines that the battery pack is the first type battery pack (40).

5. The charging device (10) according to claim 4, **characterized in that** the control means controls a charging condition to enter a standby state without performing a charging operation during a prescribed interval, when inferring that the first battery (40a) or the second battery (20a) included in the battery pack connected to the connection portion (20c, 20d, 20e, 20f) is an unchargeable state.

6. The charging device (10) according to claim 2, **characterized in that** the charging device (10) further comprises cooling means for cooling the battery pack connected to the connection portion (20c, 20d, 20e, 20f), and that the control means infers that the battery pack possesses a battery temperature control function and controls a charging condition to supply a charging current by the charging means without driving the cooling means, when the battery type discriminating means determines that the battery pack is the first type battery pack (40).

7. The charging device (10) according to claim 2, **characterized in that** the control means infers that the battery pack connected to the connection portion (20c, 20d, 20e, 20f) does not possess a battery temperature control function and controls a charging condition to supply a charging current by the charging means with driving the cooling means, when the battery type discriminating means determines that the battery pack is the second type battery pack (20).

8. The charging device (10) according to claim 2, **characterized in that** the battery type discriminating means discriminates between a battery pack that is connected to the connection portion (20c, 20d, 20e, 20f) through an adapter and a battery pack that is connected directly to the connection portion (20c, 20d, 20e, 20f) without using the adapter.

9. The charging device (10) according to claim 2, **characterized in that** the battery type discriminating means discriminates between the first type battery pack (40) configured of three or more battery units connected in parallel and the second type battery pack (20) configured of one battery unit or two battery units connected in parallel, the battery unit comprising a plurality of battery cells connected in series.

10. The charging device (10) according to claim 2, **characterized in that** the battery type discriminating means discriminates between the first type battery pack (40) that is connected to a power tool through an electric power supply cable and the second type battery pack (20) that is connected directly to the power tool.

11. The charging device (10) according to claim 2, **characterized in that** the charging device (10) further comprises a charging current detecting unit configured to detect the charging current, and
that the control means infers an internal state of the battery pack connected to the connection portion (20c, 20d, 20e, 20f) based on a detection result of the charging current detecting circuit and controls the charging conditions based on an inference result, when the battery type discriminating means determines that the battery pack is the first type battery pack (40).

12. The charging device (10) according to claim 11, **characterized in that** the connection portion (20c, 20d, 20e, 20f) has only a positive terminal and a negative terminal for supplying the charging current, and
that the control means infers that the first battery (40a) or the second battery (20a) included in the battery pack connected to the connection portion (20c, 20d, 20e, 20f) is an unchargeable state and controls a charging condition to enter a standby state without performing a charging operation during a prescribed interval, when the charging current detecting means does not detect a charging current.

13. The charging device (10) according to claim 12, **characterized in that** the control means infers that the first battery (40a) or the second battery (20a) included in the battery pack connected to the connection portion (20c, 20d, 20e, 20f) is a chargeable state and controls a charging condition to cancel the standby state and perform a charging operation, when the charging current detecting means detects a current.

14. The charging device (10) according to claim 13, **characterized in that** the control means infers that the first battery (40a) or the second battery (20a) included in the battery pack connected to the connection portion (20c, 20d, 20e, 20f) is the chargeable state and controls a charging condition to halt supplying the charging current based on an inference result, when the charging current detected by the charging current detecting means is less than a prescribed value after the control means canceled the standby state and performed the charging operation.

15. The charging device (10) according to claim 1, **characterized in that** the charging device (10) further comprises display means for displaying a battery state of the battery pack connected to the connecting portion, the battery state including a standby state, a charging state, and a charging completed state.

## Patentansprüche

1. Ladevorrichtung (10) umfassend:
einen Verbindungsabschnitt (20c, 20d, 20e, 20f), an den selektiv ein Batteriepack eines ersten Typs (40) und ein Batteriepack eines zweiten Typs (20) angeschlossen werden können,
- wobei das Batteriepack des ersten Typs (40) eine erste Batterie (40a) aufweist, die durch die Ladevorrichtung (10) geladen werden kann, und einen Schaltkreis (40c) aufweist, und das Batteriepack des ersten Typs (40) konfiguriert ist, um den Schaltkreis (40c) basierend auf internen Daten (307) des Batteriepacks des ersten Typs (40) auszuschalten, um einen Ladestrom zu unterbrechen, und
- wobei das Batteriepack des zweiten Typs (20) eine zweite Batterie (20a) aufweist, die von der Ladevorrichtung (10) geladen werden kann, und das Batteriepack des zweiten Typs (20) konfiguriert ist, um interne Daten (307) des Batteriepacks des zweiten Typs (20) an die Ladevorrichtung (10) bereitzustellen; und
die Ladevorrichtung (10) ferner Lademittel zum Zuführen von Ladestrom an die erste Batterie (40a) oder die zweite Batterie (20a) umfasst, die in einem Batteriepack enthalten sind, wenn sie mit dem Verbindungsabschnitt (20c, 20d, 20e, 20f) verbunden sind; und
die Ladevorrichtung (10) ferner einen Batterietyp-Diskriminator (16) umfasst, der konfiguriert ist, um zwischen dem Batteriepack des ersten Typs (40) und dem Batteriepack des zweiten Typs (20) zu unterscheiden; und
die Ladevorrichtung (10) ferner ein Steuermittel umfasst, das konfiguriert ist, um einen Ladezustand des Batteriepacks des zweiten Typs (20) auf der Grundlage der internen Daten (307) des Batteriepacks des zweiten Typs (20) zu steuern, die von dem Batteriepack des zweiten Typs (20) bereitgestellt werden, wenn das Batteriepack des zweiten Typs (20) mit dem Verbindungsabschnitt (20c, 20d, 20e, 20f) verbunden ist, und einen Ladezustand zu steuern, dass der Vorgang zum Zuführen des Ladestroms abgebrochen wird (S318), wenn das Batteriepack des ersten Typs (40) mit dem Verbindungsabschnitt (20c, 20d, 20e, 20f) verbunden ist und das Steuermittel folgert, dass das Laden der ersten Batterie (40a), die in dem Batteriepack des ersten Typs (40) enthalten ist, nicht durchführbar ist (S316).

2. Ladevorrichtung (10) nach Anspruch 1, **dadurch gekennzeichnet, dass** die Ladevorrichtung (10) ferner Batterietyp-Diskriminatormittel zur Unterscheidung zwischen dem Batteriepack des ersten Typs (40) und dem Batteriepack des zweiten Typs (20) umfasst.

3. Ladevorrichtung (10) nach Anspruch 2, **dadurch gekennzeichnet, dass** der Verbindungsabschnitt (20c, 20d, 20e, 20f) einen Pluspol und einen Minuspol zum Zuführen des Ladestroms aufweist und das Batteriepack des ersten Typs (40) nur über den Pluspol und den Minuspol mit dem Verbindungsabschnitt verbunden ist.

4. Ladevorrichtung (10) nach Anspruch 2, **dadurch gekennzeichnet, dass** das Steuermittel einen internen Zustand des mit dem Verbindungsabschnitt (20c, 20d, 20e, 20f) verbundenen Batteriepacks ableitet und den Ladezustand auf der Grundlage eines Ableitungsergebnisses steuert, wenn das Batterietyp-Diskriminatormittel feststellt, dass es sich bei dem Batteriepack um das Batteriepack des ersten Typs (40) handelt.

5. Ladevorrichtung (10) nach Anspruch 4, **dadurch gekennzeichnet, dass** das Steuermittel einen Ladezustand steuert, um in einen Standby-Zustand einzutreten, ohne einen Ladevorgang während eines vorgeschriebenen Intervalls durchzuführen, wenn es ableitet, dass die erste Batterie (40a) oder die zweite Batterie (20a), die in dem mit dem Verbindungsabschnitt (20c, 20d, 20e, 20f) verbundenen Batteriepack enthalten ist, in einem nicht aufladbaren Zustand ist.

6. Ladevorrichtung (10) nach Anspruch 2, **dadurch gekennzeichnet, dass** die Ladevorrichtung (10) ferner ein Kühlmittel zum Kühlen des mit dem Verbindungsabschnitt (20c, 20d, 20e, 20f) verbundenen Batteriepacks umfasst, und dass das Steuermittel daraus schließt, dass das Batteriepack eine Batterietemperatursteuerfunktion besitzt und einen Ladezustand steuert, um einen Ladestrom durch das Lademittel zu liefern, ohne das Kühlmittel anzutreiben, wenn das Batterietyp-Diskriminatormittel feststellt, dass es sich bei dem Batteriepack um das Batteriepack des ersten Typs (40) handelt.

7. Ladevorrichtung (10) nach Anspruch 2, **dadurch gekennzeichnet, dass** das Steuermittel folgert, dass das mit dem Verbindungsabschnitt (20c, 20d, 20e, 20f) verbundene Batteriepack keine Batterietemperatursteuerfunktion besitzt, und einen Ladezustand steuert, um einen Ladestrom durch das Lademittel mit dem Antreiben des Kühlmittels zu liefern, wenn das Batterietyp-Diskriminatormittel feststellt, dass es sich bei dem Batteriepack um das Batteriepack des zweiten Typs (20) handelt.

8. Ladevorrichtung (10) nach Anspruch 2, **dadurch gekennzeichnet, dass** das Batterietyp-Diskriminatormittel zwischen einem Batteriepack, das über einen Adapter mit dem Verbindungsabschnitt (20c, 20d, 20e, 20f) verbunden ist, und einem Batteriepack, das ohne Verwendung des Adapters direkt mit dem Verbindungsabschnitt (20c, 20d, 20e, 20f) verbunden ist, unterschiedet.

9. Ladevorrichtung (10) nach Anspruch 2, **dadurch gekennzeichnet, dass** das Batterietyp-Diskriminatormittel zwischen dem Batteriepack des ersten Typs (40), das aus drei oder mehr parallel geschalteten Batterieeinheiten konfiguriert ist, und dem Batteriepack des zweiten Typs (20), das aus einer Batterieeinheit oder zwei parallel geschalteten Batterieeinheiten konfiguriert ist, unterscheidet, wobei die Batterieeinheit mehrere in Reihe geschaltete Batteriezellen umfasst.

10. Ladevorrichtung (10) nach Anspruch 2, **dadurch gekennzeichnet, dass** das Batterietyp-Diskriminatormittel zwischen dem Batteriepack des ersten Typs (40), das über ein Stromversorgungskabel mit einem Elektrowerkzeug verbunden ist, und dem Batteriepack des zweiten Typs (20), das direkt mit dem Elektrowerkzeug verbunden ist, unterscheidet.

11. Ladevorrichtung (10) nach Anspruch 2, **dadurch gekennzeichnet, dass** die Ladevorrichtung (10) ferner eine Ladestromerfassungseinheit umfasst, die konfiguriert ist, um den Ladestrom zu erfassen, und dass das Steuermittel einen internen Zustand des mit dem Verbindungsabschnitt (20c, 20d, 20e, 20f) verbundenen Batteriepacks auf der Grundlage eines Erfassungsergebnisses der Ladestromerfassungsschaltung ableitet und die Ladezustände auf der Grundlage eines Ableitungsergebnisses steuert, wenn das Batterietyp-Diskriminatormittel feststellt, dass es sich bei dem Batteriepack um das Batteriepack des ersten Typs (40) handelt.

12. Ladevorrichtung (10) nach Anspruch 11, **dadurch gekennzeichnet, dass** der Verbindungsabschnitt (20c, 20d, 20e, 20f) nur einen Pluspol und einen Minuspol zum Zuführen des Ladestroms aufweist, und
dass das Steuermittel folgert, dass die erste Batterie (40a) oder die zweite Batterie (20a), die in dem mit dem Verbindungsabschnitt (20c, 20d, 20e, 20f) verbundenen Batteriepack enthalten ist, sich in einem nicht aufladbaren Zustand befindet, und einen Ladezustand steuert, um in einen Standby-Zustand einzutreten, ohne einen Ladevorgang während eines vorgeschriebenen Intervalls durchzuführen, wenn das Ladestromerfassungsmittel keinen Ladestrom erfasst.

13. Ladevorrichtung (10) nach Anspruch 12, **dadurch gekennzeichnet, dass** das Steuermittel folgert, dass die erste Batterie (40a) oder die zweite Batterie (20a), die in dem mit dem Verbindungsabschnitt (20c, 20d, 20e, 20f) verbundenen Batteriepack enthalten ist, sich in einem aufladbaren Zustand befindet, und einen Ladezustand steuert, um den Standby-Zustand aufzuheben und einen Ladevorgang durchzuführen, wenn das Ladestromerfassungsmittel einen Strom erfasst.

14. Ladevorrichtung (10) nach Anspruch 13, **dadurch gekennzeichnet, dass** das Steuermittel folgert, dass die erste Batterie (40a) oder die zweite Batterie (20a), die in dem mit dem Verbindungsabschnitt (20c, 20d, 20e, 20f) verbundenen Batteriepack enthalten ist, sich im aufladbaren Zustand befindet, und einen Ladezustand steuert, um das Zuführen des Ladestroms auf der Grundlage eines Ableitungsergebnisses zu stoppen, wenn der von dem Ladestromerfassungsmittel erfasste Ladestrom geringer ist als ein vorgeschriebener Wert, nachdem das Steuermittel den Standby-Zustand aufgehoben und den Ladevorgang durchgeführt hat.

15. Ladevorrichtung (10) nach Anspruch 1, **dadurch gekennzeichnet, dass** die Ladevorrichtung (10) ferner Anzeigemittel zum Anzeigen eines Batteriezustands des mit dem Verbindungsabschnitt verbundenen Batteriepacks umfasst, wobei der Batteriezustand einen Standby-Zustand, einen Ladezustand und einen Zustand nach Abschluss des Ladevorgangs aufweist.

## Revendications

1. Dispositif de charge (10) comprenant :
une section de connexion (20c, 20d, 20e, 20f) laquelle sont sélectivement connectables un pack de batteries de premier type (40) et un pack de batteries de second type (20),
- le pack de batteries de premier type (40) comportant une première batterie (40a) qui peut être chargé par le dispositif de charge (10) et ayant un circuit de commutation (40c) et le pack de batteries de premier type (40) étant configuré pour désactiver le circuit de commutation (40c) en se basant sur des données internes (307) du pack de batteries de premier type (40) pour interrompre un courant de charge, et
- le pack de batteries de second type (20) comportant une seconde batterie (20a) qui peut être chargée par le dispositif de charge (10) et le pack de batteries de second type (20) étant configuré pour fournir des données internes (307) du pack de batteries de second type (20) au dispositif de charge (10) ; et
le dispositif de charge (10) comprenant en outre un moyen de charge pour fournir du courant de charge à la première batterie (40a) ou à la seconde batterie (20a) incluse dans un pack de batteries lorsqu'elles sont connectées à la section de connexion (20c, 20d, 20e, 20f) ; et
le dispositif de charge (10) comprenant en outre un discriminateur de type de batterie (16) configuré pour faire la distinction entre le pack de batteries de premier type (40) et le pack de batteries de second type (20) ; et
le dispositif de charge (10) comprenant un moyen de commande configuré pour contrôler une situation de charge du pack de batteries de second type (20) en se basant sur les données internes (307) du pack de batteries de second type (20) fournies par le pack de batteries de second type (20) lorsque le pack de batteries de second type (20) est connecté à la section de connexion (20c, 20d, 20e, 20f), et contrôler une situation de charge de manière à stopper (S318) l'opération pour fournir le courant de charge lorsque le pack de batteries de premier type (40) est connecté à la section de connexion (20c, 20d, 20e, 20f), et le moyen de commande infère que la charge de la première batterie (40a) incluse dans le pack de batteries de premier type (40) n'est pas faisable (S316).

2. Dispositif de charge (10) selon la revendication 1, **caractérisé en ce que** le dispositif de charge (10) comprend en outre un moyen de discrimination de type de batterie pour faire la distinction entre le pack de batteries de premier type (40) et le pack de batteries de second type (20).

3. Dispositif de charge (10) selon la revendication 2, **caractérisé en ce que** la section de connexion (20c, 20d, 20e, 20f) a une borne positive et une borne négative pour fournir le courant de charge, et que le pack de batteries de premier type (40) est connecté à la section de connexion seulement via la borne positive et la borne négative.

4. Dispositif de charge (10) selon la revendication 2, **caractérisé en ce que** le moyen de commande infère un état interne du pack de batteries connecté à la section de connexion (20c, 20d, 20e, 20f) et contrôle la situation de charge en se basant sur un résultat d'inférence lorsque le moyen de discrimination de type de batterie détermine que le pack de batteries est le pack de batteries de premier type (40).

5. Dispositif de charge (10) selon la revendication 4, **caractérisé en ce que** le moyen de commande de contrôle une situation de charge pour entrer dans un état de veille sans réaliser une opération de charge pendant un intervalle prescrit lorsqu'il infère que la première batterie (40a) ou la seconde batterie (20a) incluse dans le type de batterie connecté à la section de connexion (20c, 20d, 20e, 20f) est un état non chargeable.

6. Dispositif de charge (10) selon la revendication 2, **caractérisé en ce que** le dispositif de charge (10) comprend en outre un moyen de refroidissement pour refroidir le pack de batteries connecté à la section de connexion (20c, 20d, 20e, 20f), et que le moyen de commande infère que le pack de batteries possède une fonction de contrôle de température de batterie et contrôle une situation de charge pour fournir un courant de charge au moyen du moyen de charge sans entraîner le moyen de refroidissement lorsque le moyen de discrimination de type de batterie détermine que le pack de batteries est le pack de batteries de premier type (40).

7. Dispositif de charge (10) selon la revendication 2, **caractérisé en ce que** le moyen de commande infère que le pack de batteries connecté à la section de connexion (20c, 20d, 20e, 20f) ne possède pas une fonction de contrôle de température de batterie et contrôle une situation de charge pour fournir un courant de charge au moyen du moyen de charge avec entraînement du moyen de refroidissement lorsque le moyen de discrimination de type de batterie détermine que le pack de batteries est le pack de batteries de second type (20).

8. Dispositif de charge (10) selon la revendication 2, **caractérisé en ce que** le moyen de discrimination de type de batterie fait la distinction entre un pack de batterie qui est connecté à la section de connexion (20c, 20d, 20e, 20f) par un adaptateur et un pack de batterie qui est connecté directement à la section de connexion (20c, 20d, 20e, 20f) sans utiliser l'adaptateur.

9. Dispositif de charge (10) selon la revendication 2, **caractérisé en ce que** le moyen de discrimination de type de batterie fait la distinction entre le pack de batteries de premier type (40) composé de trois unités de batterie ou plus connectées en parallèle et le pack de batteries de second type (20) composé d'une unité de batterie ou de deux unités de batterie connectées en parallèle, l'unité de batterie comprenant une pluralité de cellules de batterie connectées en série.

10. Dispositif de charge (10) selon la revendication 2, **caractérisé en ce que** le moyen de discrimination de type de batterie fait la distinction entre le pack de batteries de premier type (40) qui est connecté à un outil électrique par un câble d'alimentation électrique, et le pack de batteries de second type (20) qui est connecté directement à l'outil électrique.

11. Dispositif de charge (10) selon la revendication 2, **caractérisé en ce que** le dispositif de charge (10) comprend en outre une unité de détection de courant de charge configurée pour détecter le courant de charge, et
**que** le moyen de commande infère un état interne du pack de batteries connecté à la section de connexion (20c, 20d, 20e, 20f) en se basant sur un résultat de détection du circuit de détection de courant de charge et contrôle les situations de charge en se basant sur un résultat d'inférence lorsque le moyen de discrimination de type de batterie détermine que le pack de batteries est le pack de batteries de premier type (40).

12. Dispositif de charge (10) selon la revendication 11, **caractérisé en ce que** la section de connexion (20c, 20d, 20e, 20f) a seulement une seule borne positive et une borne négative pour fournir le courant de charge, et
**que** le moyen de commande infère que la première batterie (40a) ou la seconde batterie (20a) incluse dans le pack de batteries connecté à la section de connexion (20c, 20d, 20e, 20f) est dans un état non chargeable et contrôle une situation de charge pour entrer dans un état de veille sans réaliser une opération de charge pendant un intervalle prescrit lorsque le moyen de détection de courant de charge ne détecte pas un courant de charge.

13. Dispositif de charge (10) selon la revendication 12, **caractérisé en ce que** le moyen de commande infère que la première batterie (40a) ou la seconde batterie (20a) incluse dans le pack de batteries connecté à la section de connexion (20c, 20d, 20e, 20f) est dans un état chargeable et contrôle une situation de charge pour annuler l'état de veille et réaliser une opération de charge lorsque le moyen de détection de courant de charge détecte un courant.

14. Dispositif de charge (10) selon la revendication 13, **caractérisé en ce que** le moyen de commande infère que la première batterie (40a) ou la seconde batterie (20a) incluse dans le pack de batteries connecté à la section de connexion (20c, 20d, 20e, 20f) est dans l'état chargeable et contrôle une situation de charge pour arrêter la fourniture de courant de charge en se basant sur un résultat d'inférence lorsque le courant de charge détecté par le moyen de détection de courant de charge est inférieur à une valeur prescrite une fois que le moyen de commande a annulé l'état de veille et l'opération de charge.

15. Dispositif de charge (10) selon la revendication 1, **caractérisé en ce que** le dispositif de charge (10) comprend en outre un moyen d'affichage pour afficher un état de batterie du pack de batteries connecté à la section de connexion, l'état de batterie incluant un état de veille, un état de charge, et un état de charge achevée.
